# EUROPÄISCHE PATENTSCHRIFT

(11) **EP 3 095 759 B1**
(45) Veröffentlichungstag und Bekanntmachung des Hinweises auf die Patenterteilung: **21.03.2018**
(21) Anmeldenummer: 16170919.1
(22) Anmeldetag: 23.05.2016
(51) Int. Cl.: C01B 21/04

(54) **EINE KRYO-WINDKANAL-STICKSTOFFRÜCKGEWINNUNGSEINHEIT SOWIE EIN RÜCKGEWINNUNGSVERFAHREN**
CRYOGENIC WIND TUNNEL WITH NITROGEN RECOVERY DEVICE, AND RECOVERY METHOD
TUNNEL DE SUOFFLERIE AVEC RÉCUPÉRATION D'AZOTE ET PROCÉDÉ DE RÉCUPÉRATION

(30) Priorität: 21.05.2015 CN 201510262213
(43) Veröffentlichungstag der Anmeldung: 23.11.2016
(73) Patentinhaber: Li, Yuanming, Wuhan City, Hubei 430074 (CN)
(72) Erfinder: CHEN, Zhenhua, 621000 Mianyang, Sichuan (CN); WANG, Hai, 621000 Mianyang, Sichuan (CN); CHEN, Wanhua, 621000 Mianyang, Sichuan (CN); GAO, Rong, 621000 Mianyang, Sichuan (CN); ZHU, Changjiang, 621000 Mianyang, Sichuan (CN); LIAO, Daxiong, 621000 Mianyang, Sichuan (CN); HUANG, Zhilong, 621000 Mianyang, Sichuan (CN); WANG, Fan, 621000 Mianyang, Sichuan (CN); LIU, Longqiang, 621000 Mianyang, Sichuan (CN); LI, Yuanming, 430070 Wuhan (CN)
(74) Vertreter: Grosse, Wolf-Dietrich Rüdiger

(56) Entgegenhaltungen:
- DE-A1- 3 514 437
- DATABASE WPI Week 201004 Thomson Scientific, London, GB; AN 2009-Q64840 XP002760916, & CN 101 559 706 A (DONG P) 21. Oktober 2009 (2009-10-21)
- DATABASE WPI Week 201337 Thomson Scientific, London, GB; AN 2013-E77768 XP002760917, -& CN 202 625 854 U (SANJIANG CHEM CO LTD) 26. Dezember 2012 (2012-12-26)
- DATABASE WPI Week 201173 Thomson Scientific, London, GB; AN 2011-N34780 XP002760918, & CN 102 192 828 A (CHINESE ACAD SCI TECH INST PHYSICS & CHE) 21. September 2011 (2011-09-21)

## Beschreibung

### Technisches Gebiet

Die vorliegende Erfindung betrifft eine Stickstoffrückgewinnungseinheit sowie ein Rückgewinnungsverfahren, welches zum Gebiet der Kryo-Windkanal-Technik gehört, insbesondere eine Kryo-Windkanal-Stickstoffrückgewinnungseinheit sowie ein Rückgewinnungsverfahren.

### Hintergrund

In der Kryo-Windkanalmessung wird häufig Kryotechnik verwendet, um eine größere Reynolds-Zahl zu erhalten, während die Tieftemperatur durch die Windkanal-Kreislauf-Injektion von flüssigem Stickstoff und eine Menge Wärmeaufnahme während der Verdampfung von flüssigem Stickstoff, um die Umgebungstemperatur des Testverfahrens zu reduzieren, zu erhalten ist. Da die Umfang von den Drücke, Temperaturen und Durchflüsse des vom Kryo-Windkanal abgelassenen Stickstoffs sind sehr groß. Der Europäische Transsonische Windkanal (ETW) beispielsweise, Durchflüsse: 50kg/s - 250kg/s, Drücke: 1,15ba - 4,5ba, Temperaturen: 110k - 332k. Normalerweise kann der oben genannte Stickstoff nicht zurückgewonnen, sondern nur in die Atmosphäre entlassen werden. Die Temperatur des verdampften Stickstoffs ist noch so niedrig, dass er zu behandeln sein muss, bevor er in die Atmosphäre abgelassen wird. Zur Zeit gibt es weltweit zwei große in Betrieb genommene Kryo-Windkanale, der eine ist der 1980 von den USA gebaute National Transonic Facility (NTF) der NASA am Langley Zentrum, der andere ist der im Oktober 1994 von Deutschland, Frankreich, Großbritannien und den Niederlanden zusammen gebaute Europäische Transsonische Windkanal (ETW). Bei der Behandlung des Niedertemperatur-Stickstoffs verwendet NTF das Erhitzen des Feuerfestmaterials. Niedertemperatur-Stickstoff wird durch Hochtemperatur-Feuerfestmaterial erhitzt und dann in die Höhe ausgestoßen. Bei ETW wird die Luft durch LPG-Verbrennung auf eine hohe Temperatur erhitzt, dann wird der Niedertemperatur-Stickstoff mit dem Hochtemperaturrauchgas vermischt und schließlich in die Höhe ausgetragen. Beide Verfahren erfordern sehr viel Energie und große Menge vom Niedertemperatur-Stickstoff enthaltenen Kühlleistung Energie wird verschwendet.

In der chinesischen Patentschrift CN104110574A wird ein Kryo-Gas-Kondensat-Rückgewinnungssystem sowie ein Rückgewinnungsverfahren offenbart, das einen Tank, eine Pumpe, das Schaltventil, das erste Ventil, einen Kryokühler, einen Flüssigkeitbehälter, ein zweites Ventil umfasst. Der Tank, die Pumpe und der erste Eingang des Schaltventils sind sequentiell verbunden. Der Schaltventilausgang, das erste Ventil, der Kryokühler und der Flüssigkeitbehälter sind sequentiell verbunden. Der Tank ist mit dem zweiten Eingang des Schaltventils verbunden und der Schaltventilausgang mit dem zweiten Ventil. Allerdings gilt die Erfindung nur zur Kondensatrückführung des im jährlichen Wartungs- oder Reparaturprozess abgelassenen Erdgases der LNG-Fahrzeug-Brennstoffflasche, des LNG-Tankers, des Lagertanks usw., sowie zur Rückgewinnung kryogenes Gases wie Stickstoff, Sauerstoff, Argon usw. bei der Wartung des Tanks. Dieses System ist nicht geeignet für die Rückgewinnung des von der Kryo-Windkanalmessung abgelassenen Niedertemperatur-Stickstoffs.

In der chinesischen Gebrauchsmusterpatentschrift CN202625854U wird eine Stickstoff-Rückgewinnungseinheit offenbart, die einen 1,0MPa Stickstoff-Kompressor, einen 2,5MPa Stickstoff-Kompressor, ein automatisches Durchflussregelventil (V1681), das erste Handventil (V1617) und einen Stickstoffpuffertank enthält. Der 1,0MPa Stickstoff-Kompressorausgang ist mit dem 1,0MPa Stickstoffgasrohrnetz verbunden, der 2,5MPa Stickstoff-Kompressorausgang mit dem 2,5MPa Stickstoffgasrohrnetz, der Eingang des ersten Handventils mit dem 2,5MPa Stickstoff-Kompressorausgang, der Ausgang des ersten Handventils mit dem 1,0MPa Stickstoff-Kompressorausgang, der Eingang des automatischen Durchflussregelventils mit dem 2,5MPa Stickstoff-Kompressorausgang, der Ausgang des automatischen Durchflussregelventils mit dem 1,0MPa Stickstoff-Kompressorausgang. Beim Druckabfall des 1,0MPa Stickstoffgasrohrnetzes kann das erste Handventil oder das automatische Durchflussregelventil zweckmäßig geöffnet werden, so dass der 2,5MPa Stickstoff ins 1,0 MPa Stickstoffsystem komplementiert. Obwohl dieser Gebrauchsmuster eine Stickstoff-Rückgewinnungseinheit bereitstellt, ist seine Rolle nur eine 2,5MPa diffuse Stickstoffrückgewinnung bis 1,0MPa Rohrnetz bedeutet, kann er die Rückgewinnung des von der Windkanalmessung abgelassenen Niedertemperatur-Stickstoffs nicht realisieren. Das Dokument CN202625854 offenbart eine Stickstoff-Rückgewinnungseinheit, bei deren Verwendung der Energieverbrauch und die Kosten beim Betrieb einer Anlage reduziert werden können. Die Stickstoff-Rückgewinnungseinheit umfasst einen oberen und einen unteren Stickstoff-Kompressor, ein automatisches Durchflussventil, ein Handventil und einen Stickstoff-Zwischenspeicher. Der Ausgang des oberen Stickstoff-Kompressors ist mit dem Ausgang des unteren Stickstoff-Kompressors verbunden. Der obere Stickstoff-Kompressor ist darüber hinaus mit dem Handventil verbunden.

Die deutsche Offenlegungsschrift DE 35 14 437 A1 offenbart einen Kyro-Windkanal mit einer Rohrleitung zur Führung eines Strömungsmediums, insbesondere Stickstoff, mit einem Antrieb für das Strömungsmedium und mit einer Abblaseinrichtung für das gasförmige Strömungsmedium sowie mit einer Messstrecke. Die Rohrleitung ist in Form einer Acht angeordnet, so dass eine Versuchsschleife und eine Kompressor-Schleife gebildet sind. Im Kreuzungspunkt der beiden Schleifen ist ein Wärmetauscher angeordnet.

Das Dokument CN102192828 offenbart einen Kyro-Windkanal. Dieser Windkanal weist einen Bypass-Abschnitt und einen Test-Abschnitt auf, die parallel angeordnet sind. Es gibt einen Mischraum mit einem Sprühkanal zum Sprühen von flüssigem Stickstoff in den Mischraum. Ein Gasstrom wird in den Bypass-Abschnitt und / oder in den Testabschnitt hineingeleitet. Ein Steuermechanismus verbindet entweder den Bypass-Abschnitt oder den Testabschnitt mit einem Stabilisierungsabschnitt.

### Zusammenfassung der vorliegenden Erfindung

Im Vergleich zu den oben erwähnten Nachteilen des Standes der Technik, soll das durch die vorliegende Erfindung gelöste technische Problem sein, eine Kryo-Windkanal-Stickstoffrückgewinnungseinheit Sowie ein Rückgewinnungsverfahren bereitzustellen, um die Rückgewinnung des von der Kryo-Windkanalmessung abgelassenen Niedertemperatur-Stickstoffs- effektiv zu realisieren.

Um das oben genannte technische Problem zu lösen, verwendet die vorliegende Erfindung eine Kryo-Windkanal-Stickstoffrückgewinnungseinheit, mit einem Kryo-Windkanal-Kreislauf und einem Stickstoff-Kompressor-Expander-System. Zwischen dem Kryo-Windkanal-Kreislauf und dem Stickstoff-Kompressor-Expander-System ist ein Stickstoffrückgewinnungssystem vorgesehen und die drei sind sukzessiv verbunden. Das Stickstoffrückgewinnungssystem weist einen Vakuum-Niedertemperaturtank und eine kryogene Vakuumpumpe auf.

In der vorliegenden Erfindung ist eine bevorzugte Ausführungsform offenbart, dass der Vakuum-Niedertemperaturtank flüssigen Stickstoff aufweist.

In der vorliegenden Erfindung ist eine bevorzugte Ausführungsform offenbart, dass das Stickstoff-Kompressor-Expander-System einen Pufferbehälter, einen Kompressor, Wärmetauscher 1, Wärmetauscher 2, eine Drossel und einen Gas-Flüssigkeitsseparator, die sukzessiv verbunden sind, aufweist; dass es einen Expander auf dem Wärmetauscher 1 parallel gibt.

In der vorliegenden Erfindung ist ein Verfahren zur Stickstoffrückgewinnung mithilfe der Kryo-Windkanal-Stickstoffrückgewinnungseinheit offenbart, das die folgenden Schritte umfasst: (a) den Vakuum-Niedertemperaturtank anhand der kryogenen Vakuumpumpe zu evakuieren, um die Kältespeicherung des flüssigen Stickstoffs zu erreichen; (b) nach der Kältespeicherung des flüssigen Stickstoffs den vom Kryo-Windkanal-Kreislauf abgelassenen Niedertemperatur-Stickstoff in den Vakuum-Niedertemperaturtank zu spritzen, um die Wärmeaustauschgewinnung des Niedertemperatur-Stickstoffs zu erreichen; (c) nach der Wärmeaustauschgewinnung des Niedertemperatur-Stickstoffs den zusätzlichen flüssigen Stickstoff in den Vakuum-Niedertemperaturtank hinzuzufügen, um den Kältespeicherungsprozess des flüssigen Stickstoffs wieder zu beginnen.

In der vorliegenden Erfindung ist eine bevorzugte Ausführungsform des Verfahrens zur Stickstoffrückgewinnung mithilfe der Kryo-Windkanal-Stickstoffrückgewinnungseinheit offenbart, dass der Kältespeicherungsprozess des flüssigen Stickstoffs umfasst: (1) die kryogene Vakuumpumpe zu Anlaufen, um den Vakuum-Niedertemperaturtank zu evakuieren, wobei der Prozess der Kältespeicherung beginnt; (2) die kryogene Vakuumpumpe zu stoppen (schließen), wenn der flüssige Stickstoff im Vakuum-Niedertemperaturtank zu einem festen oder Fest-Flüssig-Gemisch oder kryogenen flüssigen Stickstoff (Stickstoffaufschlämmung) wird, wobei der Kältespeicherungsprozess endet.

In der vorliegenden Erfindung ist eine bevorzugte Ausführungsform des Verfahrens zur Stickstoffrückgewinnung mithilfe der Kryo-Windkanal-Stickstoffrückgewinnungseinheit offenbart, dass der Vakuumfaktor des Vakuum-Niedertemperaturtanks 10Kpa ist und der flüssige Stickstoff im Vakuum-Niedertemperaturtank zu einem festen oder Fest-Flüssig-Gemisch oder kryogenen flüssigen Stickstoff, auch Stickstoffaufschlämmung genannt, wird.

In der vorliegenden Erfindung ist eine bevorzugte Ausführungsform des Verfahrens zur Stickstoffrückgewinnung mithilfe der Kryo-Windkanal-Stickstoffrückgewinnungseinheit offenbart, dass der Wärmeaustauschgewinnungsprozess des Niedertemperatur-Stickstoffs umfasst: (1) den Niedertemperatur-Stickstoff vom Kryo-Windkanal-Kreislauf in die kryogene Vakuum-Niedertemperaturtank zu spritzen, um den Niedertemperatur-Stickstoff mit dem festen oder Fest-Flüssig-Gemisch oder kryogenen flüssigen Stickstoff (Stickstoffaufschlämmung) im Vakuum-Niedertemperaturtank zu vermischen, um den Wärmeaustauschprozess zu realisieren; (2) dass der Wärmeaustauschprozess endet, wenn der Niedertemperatur-Stickstoff zum flüssigen Stickstoff wird, wobei das Kryo-Windkanal-Stickstoffrückgewinnungsverfahren endet.

In der vorliegenden Erfindung ist eine bevorzugte Ausführungsform des Verfahrens zur Stickstoffrückgewinnung mithilfe der Kryo-Windkanal-Stickstoffrückgewinnungseinheit offenbart, dass der Wärmeaustauschprozess endet, wenn der Vakuumfaktor des Vakuum-Niedertemperaturtanks auf Normaldruck ist.

Das Arbeitsprinzip der vorliegenden Erfindung ist: Anhand der Eigenschaft der Verringerung der Siedetemperatur der Flüssigkeit bei Niederdruckumgebung wird der flüssige Stickstoff im Vakuum-Niedertemperaturtank evakuiert. Mit der Abnahme des Drucks in dem Tank sinkt der Siedepunkt von flüssigem Stickstoff, so dass er schneller verdampft. Wegen der Wärmeaufnahme während des Verdampfungsprozesses wird die Temperatur der verbleibenden flüssigen Stickstoffs verringert, so dass er zu einem festen oder Fest-Flüssig-Gemisch oder kryogenen flüssigen Stickstoff, auch Stickstoffaufschlämmung genannt, wird. Dann wird der Niedertemperatur-Stickstoff vom Windkanal-Kreislauf in die oben genannte Stickstoffaufschlämmung gespritzt, um ihn durch das Wärmeaustauschverfahren zu verflüssigen, während der von der Vakuumpumpe gezogene Stickstoff durch das Kompressor-Expander-System wieder verflüssigt wird.

Die vorteilhaften Wirkungen der vorliegenden Erfindung sind: Durch die Einstellung des Stickstoffrückgewinnungssystems am Ausgang des Niedertemperatur-Stickstoffs beim Kryo-Windkanal-Kreislauf kann die Rückgewinnung des von der Windkanalmessung abgelassenen Niedertemperatur-Stickstoffs effektiv erreicht werden. Durch die Einstellung des Stickstoff-Kompressor-Expander-Systems wird die effiziente Stickstoffrückgewinnung der vorliegenden Erfindung effektiv gewährleistet. Mit der vorliegenden Erfindung kann eine Menge Energie bei der Behandlung des von der Windkanalmessung abgelassenen Niedertemperatur-Stickstoffs erspart und die Kosten für den Entwurf und die Herstellung der Anlagen zur Behandlung des Niedertemperatur-Stickstoffs reduziert werden. Gleichzeitig ist die vorliegende Erfindung strukturell einfach, kostengünstig und einfach zu installieren, womit die Kosten für Herstellung und Verwendung der Stickstoffrückgewinnungseinheit erheblich reduziert werden.

### Kurze Beschreibung der Figuren

Figur 1: Schematische Darstellung der Struktur der Kryo-Windkanal-Stickstoffrückgewinnungseinheit der Ausführungsform der vorliegenden Erfindung;

Figur 2: Schematische Darstellung der Verbindungsbeziehung der Kryo-Windkanal-Stickstoffrückgewinnungseinheit der Ausführungsform der vorliegenden Erfindung;

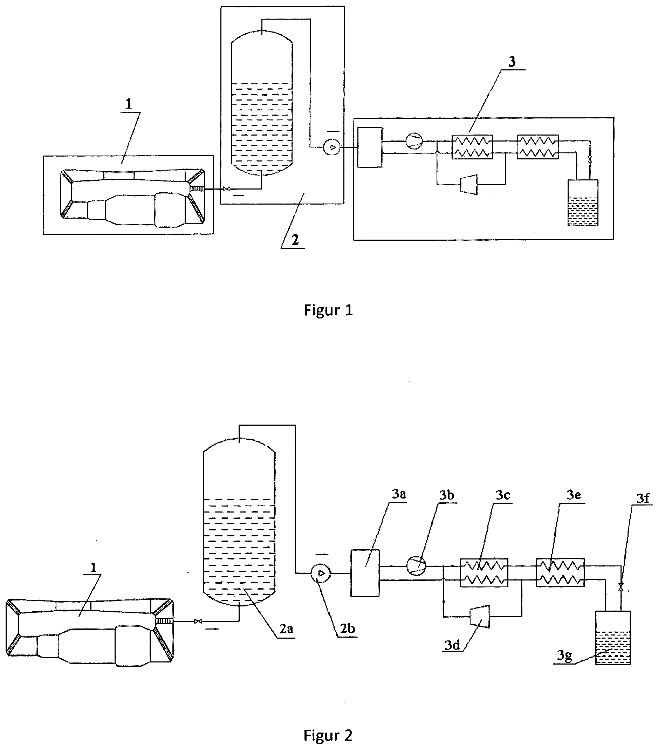

In der Figur 2:
1: Kryo-Windkanal-Kreislauf;
2: Stickstoffrückgewinnungssystem;
3: Stickstoff-Kompressor-Expander-System;
2a: Vakuum-Niedertemperaturtank;
2b: Kryogene Vakuumpumpe;
3a: Pufferbehälter;
3b: Kompressor;
3c: Wärmetauscher 1;
3d: Expander;
3e: Wärmetauscher 2;
3f: Drossel;
3g: Gas-Flüssigkeitsseparator.

### Detaillierte Beschreibung

Im Folgenden wird die vorliegende Erfindung mithilfe der Figuren und der Ausführungsform in weiteren Einzelheiten beschrieben, um das Ziel, die technische Lösung und die Vorteile der vorliegenden Erfindung deutlicher zu machen. Es sollte verstanden werden, dass die spezifische Ausführungsform die vorliegende Erfindung nur erläutern, aber nicht beschränken soll.

Aus der Figur 1 und Figur 2 - der schematischen Darstellung der Struktur und der Verbindungsbeziehung der Kryo-Windkanal-Stickstoffrückgewinnungseinheit der Ausführungsform der vorliegenden Erfindung wird festgelegt, dass diese Erfindung einen Kryo-Windkanal-Kreislauf(1) und ein Stickstoff-Kompressor-Expander-System(3) enthält; dass zwischen dem Kryo-Windkanal-Kreislauf(1) und dem Stickstoff-Kompressor-Expander-System(3) ein Stickstoffrückgewinnungssystem(2) vorgesehen ist und die drei sukzessiv verbunden sind; dass das Stickstoffrückgewinnungssystem(2) einen Vakuum-Niedertemperaturtank(2a) und eine kryogene Vakuumpumpe(2b) aufweist; dass ein Ende des Vakuum-Niedertemperaturtanks(2a) mit dem Abgabeanschluss des Niedertemperatur-Stickstoffs des Kryo-Windkanal-Kreislaufs(1), während das andere Ende mit der kryogenen Vakuumpumpe(2b) verbunden ist; dass das andere Ende der kryogenen Vakuumpumpe(2b) mit dem Stickstoff-Kompressor-Expander-System(3) verbunden ist. Das Stickstoff-Kompressor-Expander-System(3) weist einen Pufferbehälter(3a), einen Kompressor(3b), zwei Wärmetauscher, eine Drossel(3f) und einen Gas-Flüssigkeitsseparator(3g), die sukzessiv verbunden sind, auf und es gibt parallel einen Expander(3d) auf dem Wärmetauscher 1. Das Arbeitsprinzip der vorliegenden Erfindung ist: Anhand der Eigenschaft der Verringerung der Siedetemperatur der Flüssigkeit bei Niederdruckumgebung wird der flüssige Stickstoff im Vakuum-Niedertemperaturtank evakuiert. Mit der Abnahme des Drucks in dem Tank verringert der Siedepunkt von flüssigem Stickstoff, so dass er schneller verdampft. Wegen der Wärmeaufnahme während des Verdampfungsprozesses wird die Temperatur der verbleibenden flüssigen Stickstoffs verringert, so dass er zu einem festen oder Fest-Flüssig-Gemisch oder kryogenen flüssigen Stickstoff wird. Dann wird der Niedertemperatur-Stickstoff vom Kryo-Windkanal-Kreislauf in die oben genannte Stickstoffaufschlämmung gespritzt, um ihn durch das Wärmeaustauschverfahren zu verflüssigen, während der von der Vakuumpumpe gezogene Stickstoff durch das Kompressor-Expander-System wieder verflüssigt wird.

Verhältnis zwischen Stickstoffdampfdruck und Temperatur, wie folgt:

| Druck (Pa) | 1 | 10 | 100 | 1k | 10k | 100k |
|---|---|---|---|---|---|---|
| Temperatur (K) | 37 | 41 | 46 | 53 | 62 | 77 |

Das Stickstoffrückgewinnungsverfahren anhand der Kryo-Windkanal-Stickstoffrückgewinnungseinheit umfasst hauptsächlich drei Schritte: Injektion des flüssigen Stickstoffs, Kältespeicherung des flüssigen Stickstoffs und Wärmeaustauschgewinnung des Niedertemperatur-Stickstoffs. Wobei die Injektion des flüssigen Stickstoffs bedeutet, dass eine bestimmte Menge von flüssigem Stickstoff in den Vakuum-Niedertemperaturtank(2a) gespritzt wird. Nach der Injektion des flüssigen Stickstoffs beginnt die Kältespeicherung des flüssigen Stickstoffs. Anlaufen die kryogene Vakuumpumpe(2b), um damit den Vakuum-Niedertemperaturtank(2a) zu evakuieren. Wegen der Eigenschaft der Verringerung der Siedetemperatur der Flüssigkeit bei Niederdruckumgebung wird der flüssige Stickstoff im Vakuum-Niedertemperaturtank evakuiert. Mit der Abnahme des Drucks in dem Tank verringert der Siedepunkt von flüssigem Stickstoff, so dass er schneller verdampft. Wegen der Wärmeaufnahme während des Verdampfungsprozesses wird die Temperatur der verbleibenden flüssigen Stickstoffs verringert, so dass er zu einem festen oder Fest-Flüssig-Gemisch oder kryogenen flüssigen Stickstoff wird. Wenn der Druck im Tank etwa. 10KPa und die Temperatur -213∼-211°C ist, bekommt man einen festen oder ein Fest-Flüssig-Gemisch oder kryogenen flüssigen Stickstoff (Stickstoffaufschlämmung). Schließen die kryogene Vakuumpumpe(2b) und der Kältespeicherungsprozess endet. Bei der Wärmeaustauschgewinnung des Niedertemperatur-Stickstoffs handelt es sich darum, den Niedertemperatur-Stickstoff vom Kryo-Windkanal-Kreislauf(1) in die kryogene Vakuum-Niedertemperaturtank(2a) zu spritzen, um den Niedertemperatur-Stickstoff mit dem festen oder Fest-Flüssig-Gemisch oder kryogenen flüssigen Stickstoff im Vakuum-Niedertemperaturtank(2a) zu vermischen, um den Niedertemperatur-Stickstoff durch den Wärmetauscherprozess zu verflüssigen, so dass die Rückgewinnung des Niedertemperaturstickstoffs gelingt. Der Wärmetausch endet und die Stickstoffrückgewinnung schließt ab, wenn der Vakuumfaktor des Tanks Normaldruck und die Temperatur -196°C ist. Anschließend ist der zusätzliche flüssige Stickstoff hinzuzufügen, die kryogene Vakuumpumpe zu öffnen und der Kältespeicherungsprozess wieder zu beginnen. Um den verflüssigten Stickstoff im Vakuum-Niedertemperaturtank (2a) besser zu behandeln, kann der von der kryogenen Vakuumpumpe (2b) gezogene Stickstoff über den Pufferbehälter (3a) in den Kompressor (3b) isothermen komprimiert werden. Ein Teil des Hochdruckgases wird durch den Wärmetauscher 1 vorgekühlt, währen dein weiterer Teil des Hochdruck-Stickstoffs in den Expander (3d) expandiert wird, um Kühlung für den Wärmetauscher 2 bereitzustellen. Der vorgekühlte Hochdruck-Stickstoff wird durch Wärmetauscher 2 gekühlt und verflüssigt, über die Drossel (3f) expandiert und in den Gas-Flüssigkeitsseparator (3g). Stickstoffgas aus dem Gas-Flüssigkeitsseparator (3g) wird in den Wärmetauscher, um den Hochdruck-Stickstoff vorzukühlen, und schließlich in den Pufferbehälter (3a), damit beginnt der nächste Umlauf.

## Patentansprüche

1. Eine Kryo-Windkanal-Stickstoffrückgewinnungeinheit, mit einem Kryo-Windkanal-Kreislauf (1) und mit einem Stickstoff-Kompressor-Expander-System (3);
**dadurch gekennzeichnet,**
**dass** zwischen dem Kryo-Windkanal-Kreislauf (1) und dem Stickstoff-Kompressor-Expander-System (3) ein Stickstoffrückgewinnungssystem (2) vorgesehen ist und die drei sukzessiv verbundenen sind; und
**dass** das Stickstoffrückgewinnungssystem (2) einen Vakuum-Niedertemperaturtank (2a) und eine kryogene Vakuumpumpe (2b) aufweist.

2. Kryo-Windkanal-Stickstoffrückgewinnungseinheit nach Anspruch 1,
**dadurch gekennzeichnet,**
**dass** der Vakuum-Niedertemperaturtank (2a) flüssigen Stickstoff aufweist.

3. Kryo-Windkanal-Stickstoffrückgewinnungseinheit nach Anspruch 1,
**dadurch gekennzeichnet,**
**dass** das Stickstoff-Kompressor-Expander-System (3) einen Pufferbehälter (3a), einen Kompressor (3b), Wärmetauscher 1(3c), Wärmetauscher 2(3e), eine Drossel (3f) und einen Gas-Flüssigkeitsseparator (3g), die sukzessiv verbunden sind, aufweist; und
**dass** ein Expander (3d) parallel zu dem Wärmetauscher 1(3c) angeordnet ist.

4. Ein Verfahren zur Stickstoffrückgewinnung mithilfe der Kryo-Windkanal-Stickstoffrückgewinnungseinheit nach Anspruch 1, umfasst die folgenden Schritte:
(a) den Vakuum-Niedertemperaturtank (2a) anhand der kryogenen Vakuumpumpe (2b)a zu evakuieren, um die Kältespeicherung des flüssigen Stickstoffs zu erreichen;
(b) nach der Kältespeicherung des flüssigen Stickstoffs den vom Kryo-Windkanal-Kreislauf (1) abgelassenen Niedertemperatur-Stickstoff in den Vakuum-Niedertemperaturtank (2a) zu spritzen, um die Wärmetauschgewinnung des Niedertemperatur-Stickstoffs zu erreichen; und
(c) nach der Wärmetauschgewinnung des Niedertemperatur-Stickstoffs den zusätzlichen flüssigen Stickstoff in den Vakuumtemperaturtank (2a) hinzuzufügen, um den Kältespeicherungsprozess des flüssigen Stickstoffs wieder zu beginnen.

5. Verfahren zur Stickstoffrückgewinnung nach Anspruch 4,
**dadurch gekennzeichnet,**
**dass** der Kältespeicherungsprozess des flüssigen Stickstoffs folgendes umfasst:
(1) die kryogene Vakuumpumpe (2b) zu öffnen, um den Vakuum-Niedertemperaturtank (2a) zu evakuieren, wobei der Prozess der Kältespeicherung beginnt;
(2) die kryogene Vakuumpumpe (2b) zu schließen, wenn der flüssige Stickstoff im Vakuum-Niedertemperaturtank (2a) zu einem festen oder Fest-Flüssig-Gemisch oder kryogenen flüssigen Stickstoff wird, wobei der Kältespeicherungsprozess endet.

6. Verfahren zur Stickstoffrückgewinnung nach Anspruch 5,
**dadurch gekennzeichnet,**
**dass** der Vakuumfaktor des Vakuum-Niedertemperaturtanks (2a) 10Kpa ist.

7. Verfahren zur Stickstoffrückgewinnung nach Anspruch 4,
**dadurch gekennzeichnet,**
**dass** der Wärmeaustauschgewinnungsprozess des Niedertemperatur-Stickstoffs folgendes umfasst:
(1) den Niedertemperatur-Stickstoff vom Kryo-Windkanal-Kreislauf (1) in die kryogene Vakuumpumpe (2b) zu spritzen, um den Niedertemperatur-Stickstoff mit dem festen oder Fest-Flüssig-Gemisch oder kryogenen flüssigen Stickstoff im Vakuum-Niedertemperaturtank (2a) zu vermischen, um den Wärmeaustauschprozess zu realisieren;
(2) **dass** der Wärmeaustauschprozess endet, wenn der Niedertemperatur-Stickstoff zum flüssigen Stickstoff wird, wobei das Kryo-Windkanal-Stickstoffrückgewinnungsverfahren endet.

8. Verfahren zur Stickstoffrückgewinnung nach Anspruch 7,
**dadurch gekennzeichnet,**
**dass** der Wärmeaustauschprozess endet, wenn der Vakuumfaktor des Vakuum-Niedertemperaturtanks (2a) Normaldruck erreicht hat.

## Claims

1. A cryogenic wind tunnel nitrogen recovery unit, with a cryogenic wind tunnel circuit (1) and with a nitrogen compressor-expander system (3),
**characterised in that**
a nitrogen recovery system (2) is provided between the cryogenic wind tunnel circuit (1) and the nitrogen compressor-expander system (3) and the three are connected in succession; and
that the nitrogen recovery system (2) comprises a vacuum low-temperature tank (2a) and a cryogenic vacuum pump (2b).

2. The cryogenic wind tunnel nitrogen recovery unit according to claim 1,
**characterised in that**
the vacuum low-temperature tank (2a) comprises liquid nitrogen.

3. The cryogenic wind tunnel nitrogen recovery unit according to claim 1,
**characterised in that**
the nitrogen compressor-expander system (3) comprises a buffer container (3a), a compressor (3b), a heat exchanger 1(3c), a heat exchanger 2(3e), a throttle valve (3f) and a gas-liquid separator (3g), which are connected in succession; and
that the expander (3d) is arranged parallel with the heat exchanger 1(3c).

4. A method for nitrogen recovery with the aid of the cryogenic wind tunnel nitrogen recovery unit according to claim 1, comprising the following steps:
(a) evacuating the vacuum low-temperature tank (2a) with the aid of the cryogenic vacuum pump (2b) in order to achieve the cold storage of the liquid nitrogen;
(b) following the cold storage of the liquid nitrogen, injecting the low-temperature nitrogen discharged by the cryogenic wind tunnel circuit (1) into the vacuum low-temperature tank (2a) in order to achieve the heat exchange recovery of the low-temperature nitrogen; and
(c) following the heat exchange recovery of the low-temperature nitrogen, adding the additional liquid nitrogen into the vacuum temperature tank (2a) in order to start the cold storage process of the liquid nitrogen again.

5. The method for nitrogen recovery according to claim 4,
**characterised in that**
the cold storage process of the liquid nitrogen comprises the following:
(1) opening the cryogenic vacuum pump (2b) in order to evacuate the vacuum low-temperature tank (2a), wherein the process of cold storage begins;
(2) closing the cryogenic vacuum pump (2b) when the liquid nitrogen in the vacuum low-temperature tank (2a) becomes a solid or solid-liquid mixture or cryogenic liquid nitrogen, wherein the cold storage process ends.

6. The method for nitrogen recovery according to claim 5,
**characterised in that**
the vacuum factor of the vacuum low-temperature tank (2a) is 10Kpa.

7. The method for nitrogen recovery according to claim 4,
**characterised in that**
the heat exchange recovery process of the low-temperature nitrogen comprises the following:
(1) injecting the low-temperature nitrogen from the cryogenic wind tunnel circuit (1) into the cryogenic vacuum pump (2b), in order to mix the low-temperature nitrogen with the solid or solid-liquid mixture or cryogenic liquid nitrogen in the vacuum low-temperature tank (2a), in order to carry out the heat exchange process;
(2) ending the heat exchange process when the low-temperature nitrogen becomes liquid nitrogen, wherein the cryogenic wind tunnel nitrogen recovery process ends.

8. The method for nitrogen recovery according to claim 7,
**characterised in that**
the heat exchange process ends when the vacuum factor of the vacuum low-temperature tank (2a) has reached normal pressure.

## Revendications

1. Unité de récupération d'azote de soufflerie cryogénique avec un circuit de soufflerie cryogénique (1) et avec un système compresseur-expanseur d'azote (3) :
**caractérisé en ce qu'**
entre le circuit de soufflerie cryogénique (1) et le système compresseur-expanseur d'azote (3) est prévu un système de récupération d'azote (2) et les trois sont reliés en succession, et
**en ce que** le système de récupération d'azote (2) comporte un réservoir basse température sous vide (2a) et une pompe à vide cryogénique (2b).

2. Unité de récupération d'azote de soufflerie cryogénique (1) selon la revendication 1, **caractérisée en ce que** le réservoir basse température sous vide (2a) comporte de l'azote liquide.

3. Unité de récupération d'azote de soufflerie cryogénique (1) selon la revendication 1, **caractérisée en ce que** le système compresseur-expanseur d'azote (3) comporte un réservoir tampon (3a), un compresseur (3b), un échangeur de chaleur 1(3c), un échangeur de chaleur 2(3e), un étrangleur (3f) et un séparateur gaz-liquide (3g), qui sont reliés en succession, et
**en ce qu'**un expanseur (3d) est disposé parallèlement à l'échangeur de chaleur 1(3c).

4. Procédé de récupération d'azote à l'aide de l'unité de récupération d'azote de soufflerie cryogénique (1) selon la revendication 1, comprenant les étapes suivantes :
(a) évacuation du réservoir basse température sous vide (2a) à l'aide de la pompe à vide cryogénique (2b)a pour obtenir l'accumulation de froid de l'azote liquide,
(b) après l'accumulation de froid de l'azote liquide, injection de l'azote basse température écoulé du circuit de soufflerie cryogénique (1) dans le réservoir basse température sous vide (2a) pour obtenir la récupération d'échange de chaleur de l'azote à basse température, et
(c) après la récupération d'échange de chaleur de l'azote à basse température, addition d'azote liquide supplémentaire dans le réservoir à température sous vide (2a) pour débuter à nouveau le processus d'accumulation de froid de l'azote liquide.

5. Procédé de récupération d'azote selon la revendication 4 **caractérisé en ce que**
le processus d'accumulation de froid de l'azote liquide comprend les étapes suivantes :
(1) ouverture de la pompe à vide cryogénique (2b) pour évacuer le réservoir à basse température sous vide (2a), le processus d'accumulation de froid commençant,
(2) fermeture de la pompe à vide cryogénique (2b) si l'azote liquide dans le réservoir à basse température sous vide (2a) devient un mélange solide ou solide-liquide ou de l'azote liquide cryogénique, le processus d'accumulation de froid se terminant.

6. Procédé de récupération d'azote selon la revendication 5,
**caractérisée en ce que** le facteur de vide du réservoir à basse température sous vide (2a) est de 10Kpa.

7. Procédé de récupération d'azote selon la revendication 4, **caractérisée en ce que**
le processus de récupération d'échange de chaleur de l'azote à basse température comprend les étapes suivantes :
(1) injection de l'azote à basse température du circuit de soufflerie cryogénique (1) dans la pompe à vide cryogénique (2b) pour mélanger l'azote à basse température au mélange solide ou solide-liquide ou à l'azote liquide cryogénique dans le réservoir à basse température sous vide (2a) pour réaliser le processus d'échange de chaleur,
(2) fin du processus d'échange de chaleur, si l'azote à basse température devient de l'azote liquide, le procédé de récupération d'azote de soufflerie cryogénique se terminant.

8. Procédé de récupération d'azote selon la revendication 7,
**caractérisée en ce que**
le processus d'échange de chaleur se termine, si le facteur de vide du réservoir à basse température sous vide (2a) a atteint la pression normale.
